# EUROPÄISCHE PATENTSCHRIFT

(11) **EP 1 645 467 B1**
(45) Veröffentlichungstag und Bekanntmachung des Hinweises auf die Patenterteilung: **04.03.2009**
(21) Anmeldenummer: 05109229.4
(22) Anmeldetag: 05.10.2005
(51) Int. Cl.: B60Q 1/26

(54) **Vorrichtung zur Befestigung einer Leuchteinheit und Montageverfahren**
Fastening device for a lamp and assembly process
Dispositif de fixation pour une lampe et procédé d'assemblage

(30) Priorität: 09.10.2004 DE 102004049319
(43) Veröffentlichungstag der Anmeldung: 12.04.2006
(73) Patentinhaber: Hella KGaA Hueck & Co., 59552 Lippstadt (DE)
(72) Erfinder: Kathmann, Joachim, 59555 Lippstadt (DE)
(74) Vertreter: Ostermann, Thomas

(56) Entgegenhaltungen:
- EP-A- 0 749 871
- EP-A- 1 088 701
- FR-A- 2 833 660

## Beschreibung

Die Erfindung betrifft eine Vorrichtung zur Befestigung einer Leuchteinheit in einer Karosserieöffnung eines Karosserieteils eines Fahrzeugs nach dem Oberbegriff des Patentanspruchs 1.

Aus der DE 198 13 596 A1 ist eine Vorrichtung zur Befestigung einer Leuchteinheit in einer Karosserieöffnung eines Karosserieteils eines Fahrzeugs bekannt, wobei ein Leuchtengehäuse der Leuchteinheit von einem Halteelement umgriffen ist. Das Halteelement weist zum einen federelastische Federarme auf, die gegen eine Innenseite eines vorderen Öffnungsrandes des Karosserieteils drücken. Auf einer den freien Enden der Federarme abgewandten Seite weist das Halteelement eine Öffnung auf, durch die ein mit dem Leuchtengehäuse verbundener Zapfen in Einschubrichtung des Leuchtegehäuses in die Karosserieöffnung eingreifen kann. Durch seitliche Verschiebung des Zapfens quer zur Einschubrichtung erfolgt eine Verklemmung des Leuchtengehäuses in der Karosserieöffnung, wobei ein auf einer dem Leuchtengehäuse abgewandten Seite auf dem Zapfen gelagertes Klemmelement von hinten auf das Halteelement drückt. Nachteilig an der bekannten Vorrichtung bzw. Montageverfahren ist, dass das Halteelement entgegen der Einschubrichtung von hinten auf das Leuchtengehäuse aufgesetzt werden muss, wobei der Zapfen durch die Öffnung des Halteelementes eingreifen kann. Dies bedingt eine Zugänglichkeit bzw. Montage von einer hinteren Seite, was den Montageaufwand erhöht.

Aus der DE 299 11 621 U1 ist eine Vorrichtung zur Befestigung einer Leuchteinheit sowie ein Montageverfahren bekannt, bei dem eine Leuchteinheit mit einem Leuchtengehäuse in eine Karosserieöffnung eingesetzt wird, wobei das Leuchteinheit mit einer Vorderseite von vorne an einem Öffnungsrand des Karosserieteils anliegt. Auf einer der Vorderseite des Leuchtengehäuses abgewandten Seite weist das Leuchtengehäuse einen Zapfen sowie eine Schraubenmutter auf, an deren vorderen Radialfläche sich ein mit federelastischen Federarmen versehenes Haltelement abstützt. Das Halteelement wird durch Betätigen der in Schraubeingriff mit dem Zapfen des Leuchtengehäuse befindlichen Schraubmutter entgegen der Einschubrichtung des Leuchtengehäuses nach vorne bewegt, bis freie Enden der Federarme gegen eine Rückseite des Öffnungsrandes des Karosserieteils gedrückt werden und das Leuchtengehäuse in der vorgesehenen Montagestellung arretiert, Nachteilig an der bekannten Vorrichtung bzw. dem Montageverfahren ist, das zur Betätigung des Halteelementes bzw. zum Verriegeln bzw. Entriegeln des Leuchtengehäuses eine Zugänglichkeit von einer Hinterseite des Leuchtengehäuses her gewährleistet sein muss.

Aus EP 1 088 701 A1 ist eine Vorrichtung zur Befestigung einer Leuchteinheit in einer Karosserieöffnung eines Karosserieteils eines Fahrzeugs bekannt, wobei die Leuchteinheit mittels eines Halteelementes rastend in der Karosserieöffnung gehalten ist. Das Halteelment ist mehrteilig ausgebildet und verfügt über zwei gegenüberliegende Federarme, die mittels eines drehbaren Stellmitteils in eine Arretierposition und eine Ausschubposition bringbar sind. Das Stellmittel weist einen manuell betätigbaren Hebel auf, an dem sich ein gelenkig an einem Leuchtengehäuse verbundenes Drehteil anschließt. Das Drehteil weist seitlich abragende Stege auf, an denen Verbindungsstangen angesetzt sind, so dass die Federarme jeweils mit dem Drehteil verbunden sind. Nachteilig an der bekannten Vorrichtung ist, dass zum Entriegeln des Halteelementes dasselbe von einer Rückseite des Leuchtengehäuses her betätigt werden muss.

Aus der FR 2 833 660 A ist eine Vorrichtung zur Befestigung einer Leuchteinheit in einer Karosserieöffnung eines Karosserieteils eines Fahrzeugs bekannt. Die Vorrichtung sieht ein Halteelement mit zwei Federarmen vor, die endseitig in eine Raststellung mit einem Rand der Karosserieöffnung bringbar sind. Zum Entriegeln des Halteelmentes ist es erforderlich, dass in einem Scheitelbereich desselben ein Hilfswerkzeug angesetzt wird, so dass im Scheitelbereich gegenüberliegend angeordnete Federlappen des Halteelementes auseinandergedrückt und gleichzeitig die freien Rastenden der Federarme zusammengedrückt werden, so dass das Leuchtengehäuse freigegeben werden kann. Nachteilig hieran ist, dass zum Entriegeln des Halteelementes ein Hilfswerkzeug von einer Rückseite des Leuchtengehäuses her erfolgen muss.

Aufgabe der vorlegenden Erfindung ist es daher, eine Vorrichtung zur Befestigung eines Leuchtengehäuses in einer Karosserieöffnung eines Fahrzeugs derart weiterzubilden, dass auf einfache Weise das Leuchtengehäuse in einher Karosserieöffnung montier- bzw. demontierbar ist, ohne dass eine Zugänglichkeit von einer Rückseite des Leuchtengehäuses innerhalb des Karosserieteils erforderlich ist.

Zur Lösung dieser Aufgabe weist die Erfindung die Merkmale des Patentanspruchs 1 auf.

Der besondere Vorteil des erfindungsgemäßen Verfahrens besteht insbesondere darin, das durch die Ausbildung des Halteelementes das Leuchtengehäuse in Karosserieöffnungen montier- bzw. demontierbar ist, ohne dass eine Zugänglichkeit von einer Rückseite des Leuchtengehäuses innerhalb des Karosserieteils erforderlich ist. Vorteilhaft kann die Montage bzw. Demontage mit einem verringeren Raumbedarf erfolgen, da das Halteelement lediglich in einer Ebene quer zur Einschubrichtung relativ zu dem Leuchtengehäuse bewegt werden muss. Erfindungsgemäß ist in der Arretierposition ein Federarm des Halteelementes mit seinem freien Ende rastend mit einer Rastlasche des Öffnungsrandes des Karosserieteils verbunden. Die Federarme sind quer zur Einschubrichtung federnd ausgebildet und drücken mit den freien Enden an gegenüberliegenden Seiten entgegengesetzt und quer zur Einschub-/Ausschubrichtung gegen Rastlaschen eines Öffnungsrandes. Vorteilhaft kann somit das Leuchtengehäuse einfach durch Einschieben desselben in die Karosserieöffnung unter Verrastung des Halteelementes an dem Öffnungsrand selbstrastend in die Arretierposition verbracht werden, ohne dass zusätzliche Montageschritte erforderlich sind. Nach der Erfindung weist das Karosserieteil und mindestens ein Federarm des Halteelementes auf einer parallel zur Einschubrichtung verlaufenden Seite zueinander fluchtende Ausnehmungen auf, so dass ein Durchstecken eines Werkzeuges durch den Federarm des Halteelementes gewährleistet ist. Dadurch, dass der Federarm schwenkbar quer zur Einschub-/Ausschubrichtung an dem Leuchtengehäuse gelagert ist, kann mittels Ausübung einer Schwenkkraft das freie Ende des Federarms in Außereingriff mit der Rastlasche des Öffnungsrandes des Karosserieteils gebracht werden, so dass nachfolgend das Leuchtengehäuse zusammen mit dem Halteelement aus der Karosserieöffnung entnehmbar ist. Diese Entriegelung kann beispielsweise von unten erfolgen, wenn das Leuchtengehäuse in der Öffnung eines als Spoiler ausgebildeten Karosserieteils angeordnet ist.

Nach einer Weiterbildung der erfindungsgemäßen Vorrichtung sind die Federarme des Haltelementes derart abgewinkeit ausgebildet, dass das Halteelement selbsthemmend an dem Leuchtengehäuse gehalten ist. Eine Relativbewegung kann nicht in Einschub- oder Ausschubrichtung erfolgen, sondern nur um die Drehachse quer zur Einschub-/Ausschubrichtung.

Ein Ausführungsbeispiel der Erfindung wird nachfolgend anhand der Zeichnungen näher erläutert.

Es zeigen:

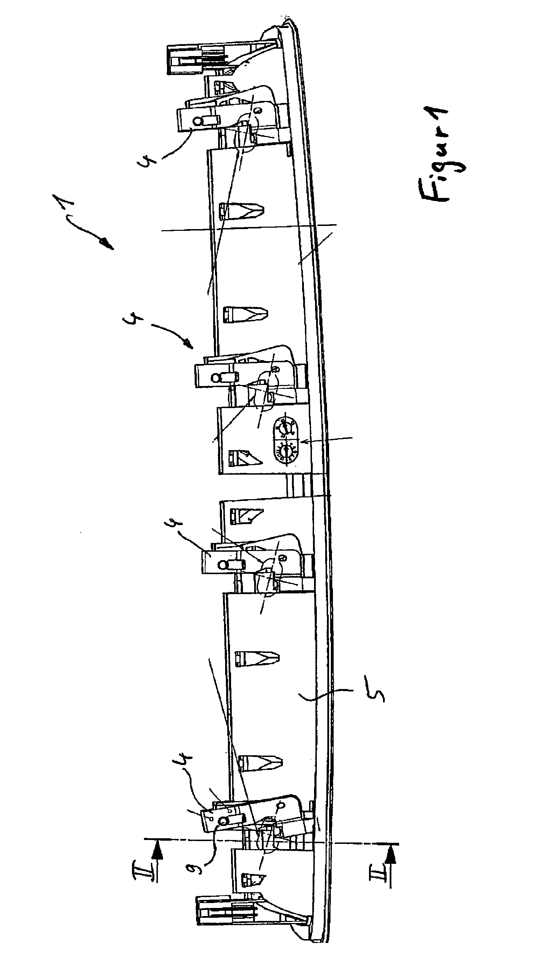

- Figur 1: eine Draufsicht auf eine Leuchteinheit mit vier Halteelementen, von denen sich ein Teil in einer Verriegelungsposition und ein anderer Teil in einer Entriegelungsposition befinden,

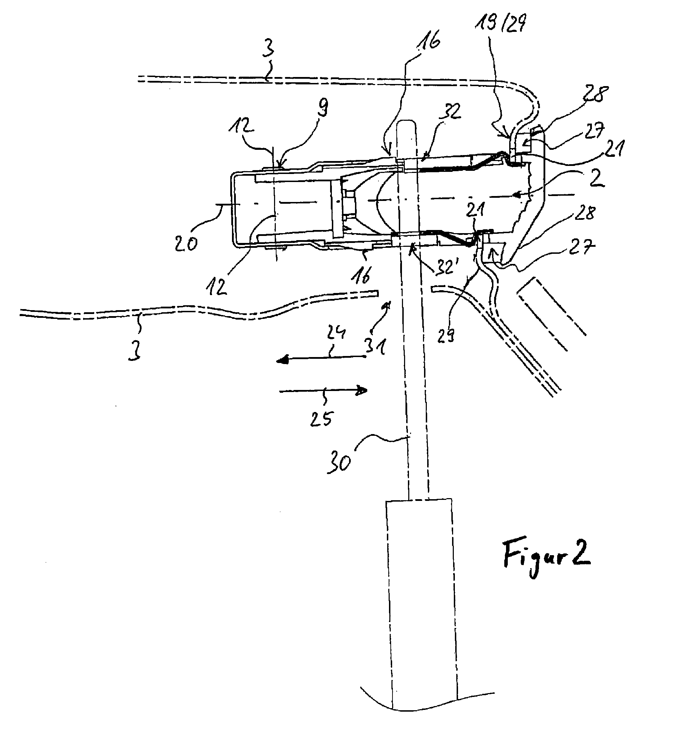

- Figur 2: einen Vertikalschnitt durch eine in einer Karosserieöffnung eingesetzten Leuchteinheit entlang der Schnittlinie II-II in Figur 1, wobei sich das Halteelement in einer Verriegelungsposition befindet,
- Figur 3: eine perspektivische Darstellung des Halteelementes von hinten,

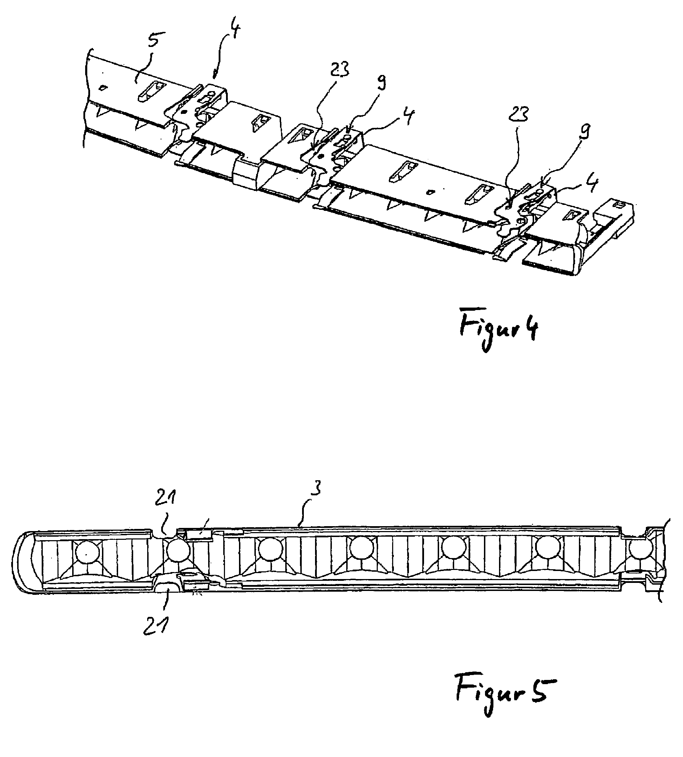

- Figur 4: eine teilweise perspektivische Darstellung der Leuchteinheit von vorne unter Weglassung einer an der Vorderseite angebrachten Lichtscheibe und einer Dichtung und
- Figur 5: eine teilweise Vorderansicht der Leuchteinheit unter Weglassung der Lichtscheibe und der Dichtung.

Eine erfindungsgemäße Vorrichtung zur Befestigung einer Leuchteinheit 1 in einer Karosserieöffnung 2 eines Karosserieteils 3 eines Fahrzeuges besteht im Wesentlichen aus mindestens einem bügelförmigen Halteelement 4, das ein Leuchtengehäuse 5 der Leuchteinheit 1 von einer Rückseite her umgreift. Im vorliegenden Ausführungsbeispiel sind dem Leuchtengehäuse 5 insgesamt vier Halteelemente 4 zugeordnet, die in Längsrichtung des Leuchtengehäuses 5 verteilt angeordnet sind. Das Leuchtengehäuse 5 ist in der Arretierposition innerhalb eines als Spoiler ausgebildeten Karosserieteils 3 angeordnet, wobei die Karosserieöffnung 2 des Spoilers 3 an einer Vorderseite eines als Aufnahmetasche ausgebildeten Karosserieteils 3 angeordnet ist.

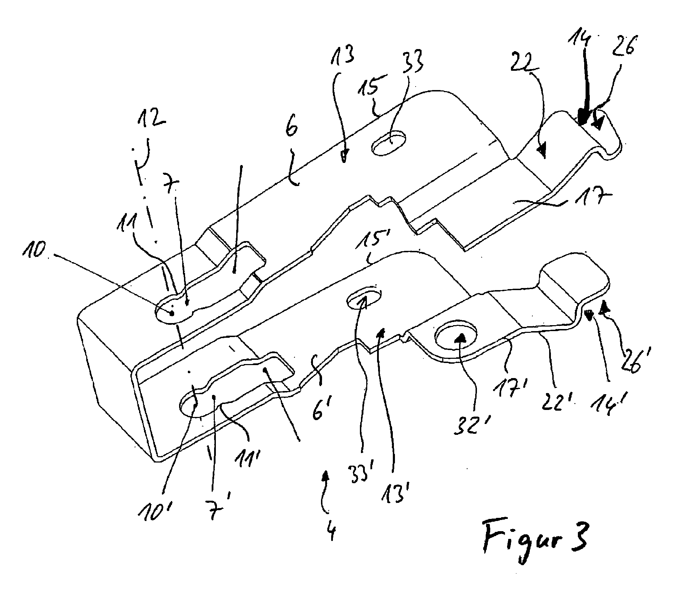

Wie besser auf Figur 3 ersichtlich ist, ist das Halteelement 4 U-förmig ausgebildet mit zwei gegenüberliegenden federelastischen Federarmen 6, 6'. Die Federarme 6, 6' weisen in einem Scheitel nahen Bereich des Halteelementes 4 jeweils eine schlüssellochförmige Öffnung 7, 7' auf, deren vorderer Bereich 8, 8' auf einen Drehzapfen 9 des Leuchtengehäuses 5 aufgesetzt, und durch Verschieben des Halteelementes 4 in Richtung der Vorderseite des Leuchtengehäuses 5 der Drehzapfen 9 in einen hinteren Bereich 10, 10' der Öffnung 7, 7' verbracht wird, so dass das Halteelement 4 formschlüssig und drehbar an dem Leuchtengehäuse 5 gelagert ist.

Ein taillierter Mittelbereich 11, 11' der schlüssellochförmigen Öffnung 7, 7' weist eine geringere Breite auf als der Durchmesser des Drehzapfens 9, so dass das Halteelement 4 lagesicher und drehbar im hinteren Bereich 10, 10' der schlüssellochförmigen Öffnung 7, 7' gehalten ist. Eine gemeinsame Verbindungslinie der hinteren Bereiche 10, 10' der Öffnung 7, 7' bildet eine Verschwenkachse 12, um die der obere Federarm 6 und der untere Federarm 6' verschwenkbar sind. Die Verschwenkachse 12 verläuft im montierten Zustand der Leuchteinheit 1 in einer vertikalen Richtung. Der hintere Lochbereich 10, 10' ist - wie der Drehzapfen 9 - kreisförmig ausgebildet.

Der obere und untere Federarm 6, 6' weisen jeweils einen Abwinklungsbereich 13, 13' auf, der sich zwischen der schlüssellochförmigen Öffnung 7, 7' und einem vorderen Rastabschnitt 14, 14' erstreckt. Hierdurch entsteht eine Exzentrizität der Haltekraftrichtung, wodurch die Federarme 6, 6' nach dem Einrasten der Drehzapfen 9 in den hinteren Bereich 10, 10' selbsthemmend an dem Leuchtengehäuse 5 gehalten sind. Ein Winkelanschlag 15, 15' der Federarme 6, 6' wirkt mit einem Anschlag 16 des Leuchtengehäuses 5 zusammen, so dass sich das Halteelement 4 in einer Verriegelungsposition quer zur Längsachse des Leuchtengehäuses 5 bzw. in Ausschub- und Einschubrichtung erstreckt. In einer Entriegelungsposition des Halteelementes 4, in der das Leuchtengehäuse 5 in Ausschubrichtung aus dem Karosserieteil 3 entnommen werden kann, sind die Federarme 6, 6' um einen spitzen Winkel, vorzugsweise in einem Bereich von 10° bis 20°, beispielsweise um 12° entgegen des Anschlags 16 verschwenkbar angeordnet.

Der Abwinklungsbereich 13 des oberen Federarms 6 und der Abwinklungsbereich 13' des unteren Federarms 6' weisen jeweils einen zum Leuchtegehäuse 5 hin versetzt angeordneten Seitenansatz 17, 17' auf, so dass in Zusammenwirken mit einer Freimachung des Leuchtengehäuses 5 eine Nut gebildet wird, durch die von einem Öffnungsrand 19 des Karosserieteils 3 in Richtung einer Längsmittelebene 20 der Karosserieöffnung 2 abragende Rastlaschen 21 während der Einschubbewegung des Leuchtengehäuses 5 in die Karosserieöffnung 2 hindurch tauchen können. In einem letzten Abschnitt der Einschubbewegung gleiten die Rastlaschen 21 über eine Anlaufschräge 22, 22' des Rastabschnitts 14, 14', so dass die Federarme 6, 6' zusammen gedrückt werden. Es kann vorkommen, dass hierbei ein kleines Drehmoment aufgebaut wird, so dass das Halteelement 4 aus der Verriegelungsposition verschwenkt wird. Zum Verharren des Halteelementes 4 in der Verriegelungsposition während der Einschubbewegung dient ein von dem Leuchtengehäuse 5 abragender Anschlagzapfen 23, an dem ein Rand der Federarme 6, 6' anliegt. Es ist somit sichergestellt, dass das Halteelement 4 während der Einschubbewegung des Leuchtengehäuses 5 weder um die Verschwenkachse 12 verdreht noch in Einschubrichtung 24 oder Ausschubrichtung 25 relativ zu dem Leuchtengehäuse 5 bewegt wird.

Durch weiteres Einschieben des Leuchtengehäuses 5 zusammen mit dem Halteelement 4 in die Karosserieöffnung 2 wird der Rastabschnitt 14, 14' mittels der Rastlaschen 21 zusammen gedrückt, wobei die Ausbuchtungen der Anlaufschrägen 22, 22' einen größeren, in einer gemeinsamen vertikalen Ebene projizierten Abstand haben als die gegenüber liegenden Rastlaschen 21. Es kann somit eine Verrastung der Federarme 6, 6' an den Rastlaschen 21 erfolgen, wobei Rastenden 26, 26' der Federarme 6, 6' unmittelbar an einer Stirnseite der Rastlaschen 21 anliegen. In der nun vorliegenden Arretierposition des Leuchtengehäuses 5 sind die Rastlaschen 21 des Karosserieteils 3 zwischen dem Rastabschnitt 14, 14' der Federarme 6, 6' und einer nachgiebigen Dichtung 27 der Leuchteinheit 1 angeordnet. Die Dichtung 27 erzeugt eine in Einschubrichtung 24 gerichtete Haltekraft und ist zwischen der Rückseite einer Lichtscheibe 28 der Leuchteinheit 1 und einen sich an die Rastlasche 21 anschließenden Abschnitt 29 des Karosserieteils 3 angeordnet.

Zur Demontage der Leuchteinheit 1 wird das Halteelement 4 mittels eines stabförmigen Hilfswerkzeugs 30 aus der Arretierposition, in der das Halteelement 4 mittels der Rastabschnitte 14, 14' und der Rastlasche 21 rastend mit dem Karosserieteil 3 verbunden ist, in eine Entriegelungsposition verbracht, in der die Rastabschnitte 14, 14' der Federarme 6, 6' nicht mehr rastend mit der Rastlasche 21 verbunden sind. Hierzu wird das Hilfswerkzeug 30 (Schraubendreher) von unten durch eine Ausnehmung 31 des Karosserieteils 3 sowie zu derselben und zueinander fluchtende Ausnehmungen 32, 32' des oberen Federarms 6 bzw. des unteren Federarms 6' hindurch gesteckt und eine Schwenkkraft in horizontaler Richtung ausgeübt, so dass das Halteelement 4 um die Verschwenkachse 12 soweit verschwenkt (vorzugsweise 12°) wird, bis die Rastlasche 21 des Karosserieteils 3 entriegelt ist. Die Ausnehmung 31 des Karosserieteils 3 gibt durch die Formgebung die notwendige Bewegungsrichtung des Hilfswerkszeugs 30 um die Verschwenkachse 12 des Halteelementes 4 innerhalb des Schwenkbereichs vor. Die mittels des Hilfswerkszeugs 30 bewirkte Entriegelungskraft muss so groß sein, dass der Anschlagzapfen 23 überdrückt wird. Die Schwenkbewegung ist beendet, sobald eine im Abwinklungsbereich 13, 13' der Federarme 6, 6' angeordnete Bohrung 33, 33' den Anschlagzapfen 23 überdeckt und dieser durch rastendes Eingreifen in die Bohrungen 33, 33' das Halteelement 4 in der Entriegelungsposition festhält. Ein Zurückschwenken des Halteelementes 4 in Richtung der Verriegelungsposition wird hierdurch verhindert. Das Leuchtengehäuse 5 befindet sich nun in der Ausschubposition und kann lediglich in Ausschubrichtung 25 herausgenommen werden. Die Rastenden 26, 26' der Federarme 6, 6' liegen nun in horizontaler Richtung neben den Rastlaschen 21, so dass nun in einem zweiten Schritt das Leuchtengehäuse 5 zusammen mit dem Halteelement 4 in Ausschubrichtung 25 der Karosserieöffnung 2 entnommen werden kann.

Für eine weitere Montage des Leuchtengehäuses werden die Federarme 6, 6' manuell in die Verriegelungsposition zurück verschwenkt, wobei die Federarme 6, 6' an dem Anschlag 16 des Leuchtengehäuses 5 anliegen. Die vier verschwenkbaren Halteelemente 4 werden jeweils im ersten Demontage-Verfahrensschritt in die gleiche Richtung, nämlich zur Fahrzeugmitte hin, um 12° verschwenkt. Die Karosserieöffnung 2 bildet vorzugsweise die Öffnung eines Spoilers, wobei die Leuchteinheit 1 als hochgesetzte Bremsleuchte ausgebildet ist.

Das Halteelement 4 besteht vorzugsweise aus einem flachen Federstahlmaterial.

## Patentansprüche

1. Vorrichtung zur Befestigung einer Leuchteinheit in einer Karosserieöffnung (2) eines Karosserieteils (3) eines Fahrzeugs, wobei die Leuchteinheit (1) in montierten Zustand mit einer Vorderseite einen Öffnungsrand des Karosserieteils (3) zumindest teilweise abdeckt, mit einem mit einem Leuchtengehäuse (5) der Leuchteinheit (1) verbundenen Halteelement (4) mit elastischen Federarmen (6, 6'), mittels dessen das Leuchtengehäuse (5) im montierten Zustand klemmend in der Karosserieöffnung (2) gehalten ist, wobei das Halteelement (4) um eine quer zu einer Einschubrichtung (24) verlaufende Verschwenkachse (12) drehbar gelagert ist, so dass durch Verschwenken des Halteelementes (4) das Leuchtengehäuse (5) von einer Arretierposition in eine Ausschubposition bringbar ist, und dass die Federarme (6, 6') des Halteelementes (4) derart ausgebildet sind, dass das Leuchtendehäuse (5) in der Arretierposition rastend in der Karosserieöffnung (2) des Karosserieteils (3) gehalten ist, **dadurch gekennzeichnet, dass** das Halteelement (4) U-förmig ausgebildet ist, wobei die Federarme (6, 6') des Halteelementes (4) in einem scheitelnahen Bereich des Halteelementes (4) jeweils eine Öffnung (7, 7') aufweisen, in im montierten Zustand der jeweils ein Drehzapfen (9) des Leuchtengehäuses (5) gehalten ist, so dass das Halteelement (4) formschlüssig und drehbar an dem Leuchtengehäuse (5) gehalten ist, und wobei eine Verbindungslinie der Öffnung (7, 7') die Verschwenkachse (12) bildet, dass in der Arretierposition ein Rand der Federarme (6, 6') an eine von dem Leuchtengehäuse (5) abragenden Anschlagzapfen (23) anliegt, dass das Karosserieteil (3) und mindestens ein Federarm (6, 6') des Halteelementes (4) eine zueinander fluchtende Ausnehmung (31, 32, 32') aufweisen zum Durchstecken eines Hilfswerkzeugs (30), derart, dass durch Ausübung einer vorgegebenen Schwenkkran das Halteelement (4) unter Überdrucken des Anschlagzapfens (23) um die Verschwenkachse (12) aus der Arretierposition in die Ausschubposition bringbar ist, in der der Anschlagzapfen (23) des Leuchtengehäuses (5) durch rastendes Eingreifen in eine Bohrung (33, 33') des Federarms (6, 6') das Halteelement (4) festhält und in der die Rastenden (26, 26') der Federarme (6, 6') neben Rastlaschen (21) des Karosserieteils (3) liegen, so dass das Leuchtengehäuse (5) zusammen mit dem Halteelement (4) in Ausschubrichtung (25) aus der Karosserieöffnung (2) herausnehmbar ist.

2. Vorrichtung nach Anspruch 1, **dadurch gekennzeichnet, dass** die Federarme (6, 6') jeweils senkrecht zur Einschubrichtung (24) nach außen verlaufende Ausbuchtungen (22, 22') aufweisen, derart, dass das Leuchtengehäuse (5) in Einschubrichtung (24) in das Karosserieteil (3) selbstrastend verschiebbar ist.

3. Vorrichtung nach einem der Ansprüche 1 oder 2, **dadurch gekennzeichnet, dass** die Federarme (6, 6') derart abgewinkelt ausgebildet sind, dass das Halteelement (4) selbsthemmend an dem Leuchtengehäuse (5) gehalten ist.

4. Vorrichtung nach einem der Ansprüche 1 bis 3, **dadurch gekennzeichnet, dass** das Karosserieteil (3) und mindestens ein Federarm (6, 6') des Halteelementes (4) eine zueinander fluchtende Ausnehmung (31, 32, 32') aufweisen zum Durchstecken eines Hilfswerkzeugs (30), derart, dass durch Ausübung einer vorgegebenen Schwenkkraft das Halteelement (4) um die Verschwenkachse (12) aus einer Verriegelungsposition in eine Entriegelungsposition verschwenkt wird, in der sich das Leuchtengehäuse (5) in einer frei gelegten Ausschubposition befindet.

## Claims

1. Fastening device for a lamp in an opening (2) of a body panel (3) of a vehicle wherein when assembled the lamp (1) covers up a marginal area of said opening in the body panel (3) by its frontal face in part at least, said fastening device comprising a holding element (4) in connection with a casing (5) of the lamp (1) which element is provided with flexible spring arms (6, 6') by means of which the casing (5) is clamped and held in the body opening (2) after assembly wherein the holding element (4) is pivotable about a swivel axis (12) cross to a push-in direction such that by swinging the holding element (4) the lamp casing (5) is adjustable from a locked position to a push-out position and that the spring arms (6, 6') of the holding element (4) are designed to keep the lamp casing (5) latched in the body opening (2) of the body panel (3) while in locked position, **characterized by** the fact that the holding element (4) is U-shaped with its spring arms (6, 6') having a hole (7, 7') each in a near-peak region of the holding element (4) to retain a pivot pin each (9) of the lamp casing (5) in assembled state such that the holding element (4) is positively and rotatably held on the lamp casing (5) wherein a connecting line of the opening (7, 7') forms the swivel axis (12); that while in locked position a marginal edge of the spring arms (6, 6') engages a stop pin (23) protruding from the lamp casing (3); and that the body panel (3) and at least one spring arm (6, 6') of the holding element (4) have aligning recesses (31, 32, 32') for an auxiliary tool (30) to be put therethrough such that by exerting a predetermined swivel force the holding element (4) can be brought from its locked position into its push-out position by forcing said stop pin (23) around the swivel axis in which lush-out position the stop pin (23) of the lamp casing (5) retains the holding element (4) by snap engagement in a bore (33, 33') of the spring arms (6, 6') and in which the snap ends (26, 26') of the spring arms (6, 6') are disposed adjacent the snap elements (21) of the body panel (3) such that the lamp casing (5) can be taken out of the body opening (2) together with the holding element (4) in lush-out direction (25).

2. Device according to Claim 1, **characterized by** the fact that the spring arms (6, 6') are provided with buckle areas (22, 22') extending perpendicularly outward such that the lamp casing (5) can be pushed into the body panel (3) in push-in direction in a self-latching mode.

3. Device according to any of the preceding Claims 1 or 2, **characterized by** the fact that the spring arms (6, 6') are angled in a manner ensuring that the holding element (4) is held on the lamp casing (5) in a self-locking mode.

4. Device according to any of the preceding Claims 1 to 3, **characterized by** the fact that the body panel (3) and at least one spring arm (6, 6') of the holding element (4) have aligning recesses (31, 32, 32') for an auxiliary tool (30) to be put therethrough such that by exerting a predetermined swivel force the holding element (4) is about the swivel axis (12) pivoted from a locked position into an unlocked position in which the lamp casing (5) is in a free position for push-out.

## Revendications

1. Dispositif pour la fixation d'une unité d'éclairage dans une ouverture de carrosserie (2) d'un élément de carrosserie (3) d'un véhicule automobile, sachant que l'unité d'éclairage (1), à l'état monté, recouvre, au moins partiellement, avec un côté avant, un bord de l'ouverture de l'élément de carrosserie (3), avec un élément de retenue (4) à bras faisant ressort (6, 6'), relié à un boîtier de lampe (5) de l'unité d'éclairage (1), au moyen duquel le boîtier de lampe (5), à l'état monté, est maintenu serré dans l'ouverture de carrosserie (2), l'élément de retenue (4) étant monté, pivotant autour d'un axe de pivotement (12), qui s'étend transversalement par rapport à une direction d'insertion (24), de sorte que, par pivotement de l'élément de retenue (4), le boîtier de lampe (5) puisse être amené d'une position d'arrêt à une position de poussée de sortie, et que les bras faisant ressort (6, 6') de l'élément de retenue (4) sont configurés de sorte que le boîtier de lampe (5) se trouve maintenu, encliqueté en position d'arrêt, dans l'ouverture de carrosserie (2) de l'élément de carrosserie (3), **caractérisé en ce que** l'élément de retenue (4) est réalisé en forme de U, sachant que les bras faisant ressort (6, 6') de l'élément de retenue (4) présentent chacun, dans une zone de l'élément de retenue (4) proche du sommet, une ouverture (7, 7'), dans laquelle, à l'état monté, un pivot (9) du boîtier de lampe (5) est respectivement maintenu, de sorte que l'élément de retenue (4) se trouve maintenu dans le boîtier de lampe (5), par emboîtement et en pouvant pivoter, et sachant qu'une ligne de liaison de l'ouverture (7, 7') forme l'axe de pivotement (12), que, dans la position d'arrêt, un bord des bras faisant ressort (6, 6') porte contre une butée (23), en saillie du boîtier de lampe (5), que l'élément de carrosserie (3) et au moins un bras faisant ressort (6, 6') de l'élément de retenue (4) présentent respectivement, en alignement l'un par rapport à l'autre, un évidement (31, 32, 32') pour le passage d'un outil auxiliaire (30) de sorte que, sous l'effet d'une force de pivotement prédéterminée, l'élément de retenue (4), pivotant autour de l'axe de pivotement (12), puisse, en surmontant la butée (23), être amené d'une position d'arrêt à la position de sortie, dans laquelle la butée (23) du boîtier de lampe (5), en s'encliquetant dans un alésage (33, 33') du bras faisant ressort (6, 6'), maintient fixement l'élément de retenue (4), et dans laquelle les extrémités d'encliquetage (26, 26') des bras faisant ressort (6, 6') sont placés à côté des pattes d'arrêt (21) de l'élément de carrosserie (3), de sorte que le boîtier de lampe (5) peut être retiré, avec l'élément de retenue (4), hors de l'ouverture de carrosserie (2), dans la direction de sortie.

2. Dispositif selon la revendication 1, **caractérisé en ce que** les bras faisant ressort (6, 6') présentent chacun des creux (22, 22') s'étendant vers l'extérieur, perpendiculairement à la direction d'insertion (24) de sorte que le boîtier de lampe (5) puisse être poussé, dans la direction d'insertion (24), dans l'élément de carrosserie (3) en s'encliquetant automatiquement.

3. Dispositif selon revendication 1 ou 2, **caractérisé en ce que** les bras faisant ressort (6, 6') sont coudés de sorte que l'élément de retenue (4) se trouve maintenu dans le boîtier de lampe (5) par auto-blocage.

4. Dispositif selon l'une des revendications 1 à 3, **caractérisé en ce que** l'élément de carrosserie (3) et au moins un bras faisant ressort (6, 6') de l'élément de retenue (4) présentent respectivement, en alignement l'un par rapport à l'autre, un évidement (31, 32, 32') pour le passage d'un outil auxiliaire (30) de sorte que, sous l'effet d'une force de pivotement prédéterminée, l'élément de retenue (4) pivote autour de l'axe de pivotement (12), d'une position de verrouillage à une position de déverrouillage, dans laquelle le boîtier de lampe (5) se trouve dans une position de sortie dégagée.
